# EUROPÄISCHE PATENTSCHRIFT

(11) **EP 0 819 272 B1**
(45) Veröffentlichungstag und Bekanntmachung des Hinweises auf die Patenterteilung: **13.01.1999**
(21) Anmeldenummer: 96909016.6
(22) Anmeldetag: 04.04.1996
(51) Int. Cl.: G05B 19/042

(54) **PROGRAMMIERGERÄT**
PROGRAMMING DEVICE
APPAREIL DE PROGRAMMATION

(30) Priorität: 07.04.1995 DE 19513230
(43) Veröffentlichungstag der Anmeldung: 21.01.1998
(73) Patentinhaber: SIEMENS AKTIENGESELLSCHAFT, 80333 München (DE)
(72) Erfinder: KELLER, Arno, D-76337 Waldbronn (DE); DALLMANN, Michael, D-90530 Wendelstein (DE); KAISER, Walter, D-90513 Zirndorf (DE); LAUER, Peter, D-76275 Ettlingen (DE); WEISS, Manfred, D-91052 Erlangen (DE); WELZ, Ulrich, D-91074 Herzogenaurach (DE)
(86) Internationale Anmeldenummer: DE9600602
(87) Internationale Veröffentlichungsnummer: WO9631814

(56) Entgegenhaltungen:
- WO-A-91/06050
- WO-A-91/19237
- WO-A-94/12914
- WO-A-95/04314
- WO-A-95/07504
- DE-A- 4 212 370

## Beschreibung

Die Erfindung betrifft ein Programmiergerät zum Erstellen und Inbetriebsetzen von Programmen zum Automatisieren von technischen Anlagen.

Es ist bekannt, leittechnisch gesteuerte und geregelte Anlagen der Verfahrenstechnik und der Energieerzeugung als Struktur- und Funktionsbilder mit einer Bedien- und Beobachtungseinheit, oft in Ebenen gegliedert, schematisch darzustellen. In einer Darstellungsart sind die Objekte, wie Schütze, Motoren, Ventile, oder Gruppen von Objekten, wie Regelantriebe mit Stellgliedern, Kraftwerkskessel und dergleichen, sowie Leitungen für Stoff, Energie und Informationsströme als Schaltbild wiedergegeben. Eine solche Darstellungsart gibt einen guten Überblick über die Anlage sowohl für den Betreiber wie den Projektierer. In einer anderen Darstellungsart wird die Gesamtanlage aus hierarchisch gegliederten Objekten aufgebaut, die jeweils eine Unterstruktur der Anlage sind. Es ergibt sich dann z. B. eine Gliederung Gesamtanlage - Teilanlage - technische Einrichtung - Betriebsmittel.

Die Funktionsstruktur einer Anlage ist hierarchisch aus Funktionsmodulen aufgebaut, die in der Regel die technische Funktion eines zugehörigen Anlagenobjektes zum Inhalt haben, d. h., die technische Funktion des Anlagenobjektes wird, soweit die Steuerung oder Regelung betroffen ist, mit dem Funktionsmodul beschrieben und durchgeführt. Beispielsweise kann zu dem Anlagenobjekt "Antrieb" das Funktionsmodul "Antriebsmotorsteuerung" gehören.

Aus der WO-A-94/12914 ist ein Programmiergerät zum Programmieren einer Anlage bekannt, bei dem in einem Speicher Funktionsmodule gespeichert sind, die mindestens einem Anlagenobjekt zugeordnet sind, dieses steuern, unterschiedliche Zustände einnehmen können und Ein- und Ausgänge aufweisen, über welche Befehle zur Zustandsänderung eingegeben und Meldungen über den erreichten Zustand ausgegeben werden.

Aus der WO-A-95/07504 ist ein Steuerungssystem für eine technische Anlage mit in mehreren Hierarchieebenen zusammenwirkenden Anlagenobjekten bekannt, die von Funktionsmodulen gesteuert, geregelt, überwacht und koordiniert werden.

Schließlich ist aus der DE-A-42 12 370 ein Modell zur programmtechnischen Nachbildung einer verfahrenstechnischen Anlage mit einer Visualisierungseinheit bekannt, wobei eine Modellierung der Betriebsmittel und der Verzweigung des Wegenetzes dargestellt wird.

Der vorliegenden Erfindung liegt die Aufgabe zugrunde, ein Programmiergerät mit einer graphischen Bedienoberfläche zu schaffen, mit dem die Steuerung und Regelung von Anlagen in einer der Anlagentechnologie entsprechenden Weise programmiert werden kann.

Erfindungsgemäß wird diese Aufgabe mit den im Anspruch 1 angegebenen Merkmalen gelöst.

Anlagenobjekte können einzelne Aggregate, wie Pumpen, Schütze, Motoren, aber auch Gruppen von Aggregaten, z. B. Abwasserreinigung, Heizkraftwerk, sein. Sie sind daher hierarchisch geordnet, wobei jedes Anlagenobjekt einer Hierarchieebene aus mehreren Anlagenobjekten der nächst niedrigen Ebene besteht. Dies gilt selbstverständlich nicht für die unterste Hierarchieebene, in der die Objekte Aggregate sind, die nicht weiter unterteilt werden können.

Die Funktionsmodule haben die Funktionalität - im allgemeinen zur Automatisierung von Anlagenobjekten - zum Inhalt, und zwar in zweifacher Hinsicht: zum einen enthalten sie die Informationen, mit denen die Funktionen symbolhaft dargestellt werden können, zum anderen diejenigen, mit denen das zugehörige Anlagenobjekt gesteuert oder geregelt wird. Sie sind daher Programmbausteine; in ihrer Gesamtheit bilden sie ein Programm zum Steuern oder Regeln von Anlagen, mit dem die Ein- und Ausgangssignale, wie Meldungen, Meßwerte, Stellsignale, in besonderer Weise behandelt werden.

Den Anlagenobjekten können im allgemeinen ein oder mehrere Funktionsmodule zugeordnet werden. Im allgemeinen besteht eine Zuordnung zwischen den Anlagenobjekten und den Funktionsmodulen, sie muß aber, wie z. B. bei Koordinierungsfunktionen, nicht bestehen. Auch die Funktionsmodule sind zweckmäßig hierarchisch geordnet, wobei die Module der unteren Hierarchieebenen durch Verfeinerung der Funktionsmodule der jeweils nächst höheren Hierarchieebene gebildet sind. Die Module der untersten Ebene können selbstverständlich nicht mehr verfeinert werden. Jedem Funktionsmodul einer höheren Hierarchieebene sind daher im allgemeinen mehrere Module der nächst niedrigeren Ebene untergeordnet.

Anhand eines in der Zeichnung veranschaulichten Ausführungsbeispiels werden im folgenden die Erfindung sowie Ausgestaltungen und Weiterbildungen näher beschrieben und erläutert.

Es zeigen
- Figur 1: ein Übersichtsschaltbild eines Teils einer Anlage zur Papierherstellung,
- Figur 2: die Anlagen- und Funktionsstruktur des Anlagenteils,
- die Figuren 3 und 4: die Darstellung eines Funktionsmoduls für zwei verschiedene Zustände.
- Figur 5: veranschaulicht die Hierarchie der Funktionsmodule.

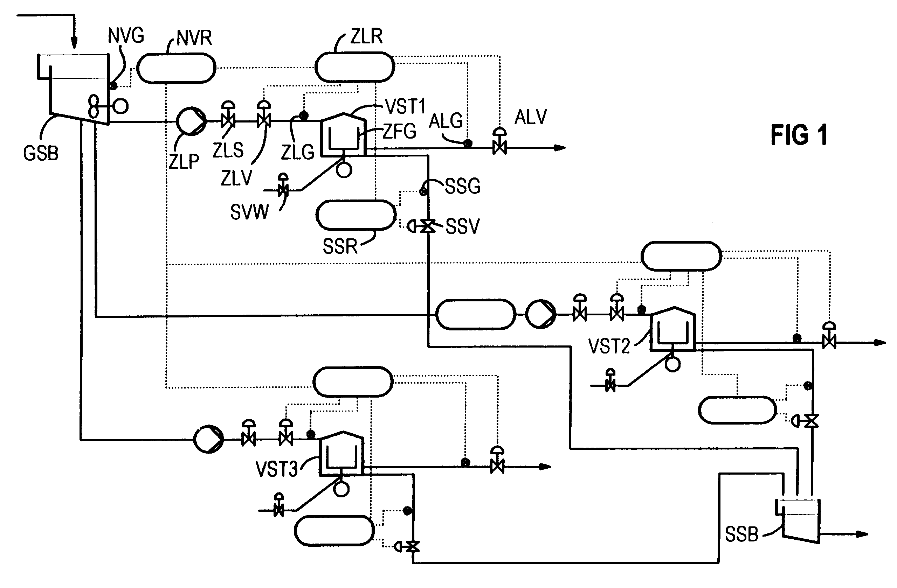

In Figur 1 ist mit GSB eine Gutstoffbütte bezeichnet, in der sich breiförmige Zellulose befindet. Ein Niveaugeber NVG erfaßt den Zustand, der als Istwert einem Niveauregler NVR zugeführt wird. An die Gutstoffbütte GSB ist über eine Zulaufpumpe ZLP, einen Zulaufschieber ZLS und ein Zulaufventil ZLV ein Vertikalsichter VST1 angeschlossen, in dem eine Zentrifuge ZFG zur Trennung der zugeführten Zellulose in Gut- und Spuckstoff enthalten ist. Der Gutstoff wird durch ein Ablaufventil ALV zur Weiterverarbeitung abgeleitet. Der Spuckstoff gelangt über ein Spuckstoffventil SSV in einen Spuckstoffbehälter SSB. Ein Zulaufgeber ZLG erfaßt den Durchfluß der dem Vertikalsichter VST1 zugeführten Zellulose, ein Ablaufgeber ALG den Durchfluß des Gutstoffs. Beide Werte werden einem Mengenregler ZLR zugeführt, der über das Zulaufventil ZLV den Zulauf von Zellulose in den Vertikalsichter VST1 regelt und außerdem eine Führungsgröße an einen Spuckstoffregler SSR gibt, der über das Spuckstoffventil SSV den Spuckstoffdurchfluß regelt. Dessen Istwert wird von einem Spuckstoffgeber SSG gemessen.

Der Niveauregler NVR hält den Füllstand der Zellulose in der Gutstoffbütte GSB konstant, indem er eine geeignete Führungsgröße an den Mengenregler ZLR gibt. Dieser und der Spuckstoffregler SSR steuern die Ventile ZLV, ALV, SSV so, daß die Zellulose in der Gutstoffbütte GSB ein vorgegebenes Niveau hat und daß ferner die Menge des entnommenen Gutstoffes in einem vorgegebenen Verhältnis zur Gesamtmenge der der Gutstoffbütte entnommenen Zellulose steht. Der Vertikalsichter VST1 muß von Zeit zu Zeit gespült werden, hierzu wird Spülwasser über ein Spülwasserventil SWV eingeleitet. Zwei weitere Vertikalsichter VST2, VST3 sind mit den beschriebenen entsprechenden Aggregaten und Reglern dem Vertikalsichter VST1 parallelgeschaltet.

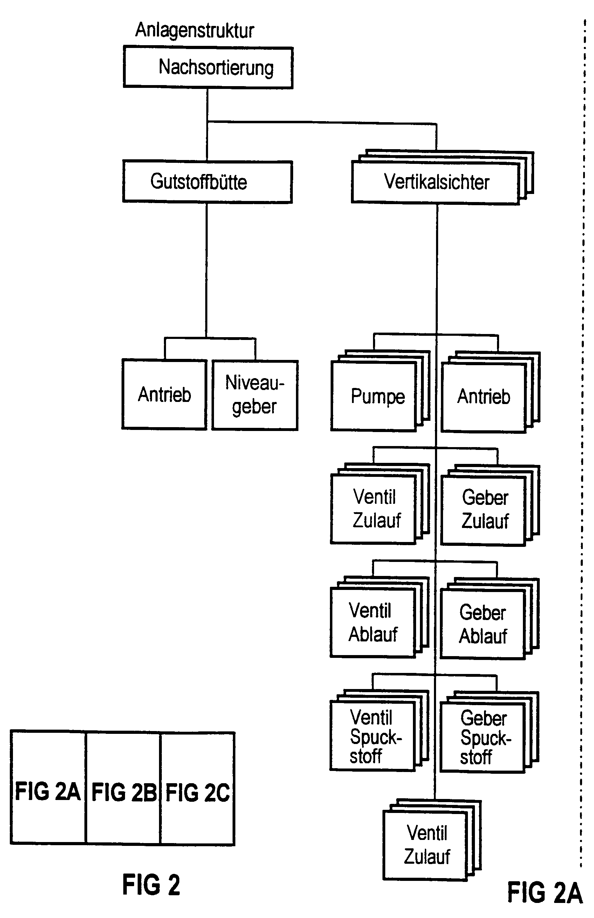

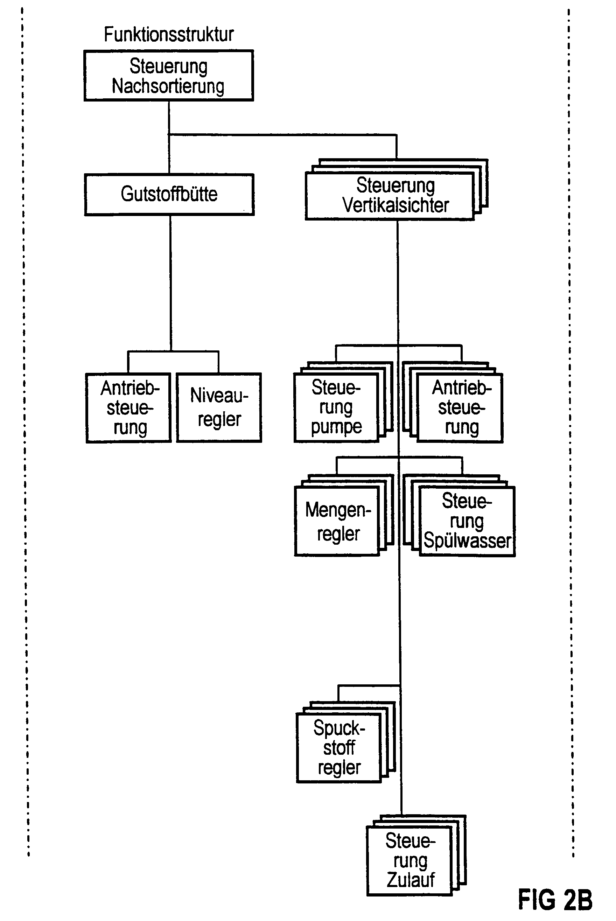

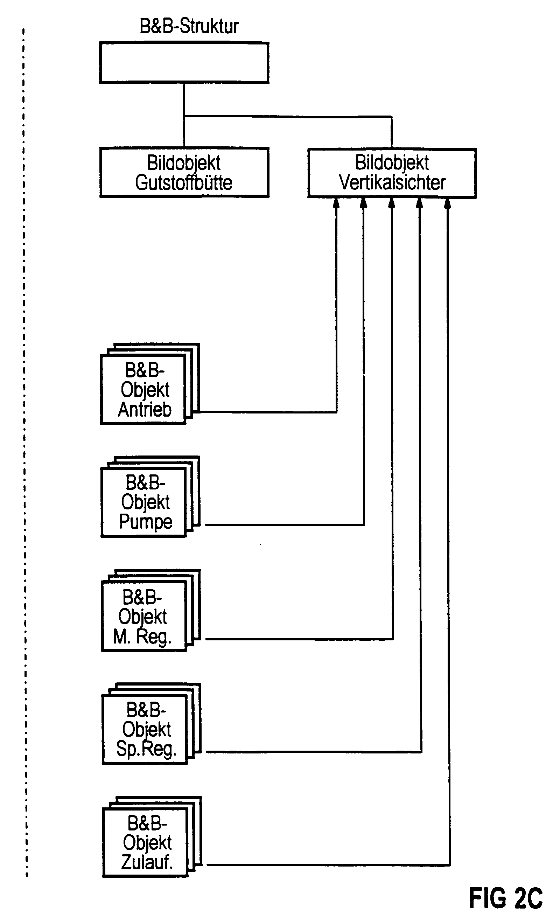

Figur 2 zeigt den in Figur 1 dargestellten Anlagenteil in drei Arten von Strukturbildern. In der Darstellungsart "Anlagenstruktur" sind die Baueinheiten, im folgenden Anlagenobjekte genannt, aufgeführt. Er ist unterteilt in die Objekte "Gutstoffbütte" und "Vertikalsichter". Diese gliedern sich in die Objekte "Antrieb" und "Niveaugeber" bzw. "Pumpe", "Antrieb", "Ventilzulauf ... Die Darstellungsart "Funktonsstruktur" entspricht im wesentlichen der Anlagenstruktur. Sie ist aus Funktionsmodulen aufgebaut, die untereinander nach Art einer Baumstruktur verbunden sind. Dem Funktionsmodul "Steuerung Nachsortieren" sind die Funktionsmodulen "Gutstoffbütte" und entsprechend den drei Vertikalsichtern drei Module "Vertikalsichter" untergeordnet. Unter diesen befinden sich in der nächsten Hierarchieebene weitere Funktionsmodule, nämlich im Falle der Gutstoffbütte die Module "Antriebssteuerung", und "Niveauregler" und im Falle des Moduls "Steuerung Vertikalsichter" die Module "Steuerung Pumpe", "Antriebssteuerung", "Mengenregler", "Spuckstoffregler", "Steuerung Zulauf" und "Steuerung Spülwasser". Die Verbindung, die aus logischen Verknüpfungsgliedern bestehen können, zwischen Funktionsmodulen einer Hierarchieebene untereinander und mit einem gemeinsamen übergeordneten Modul erlauben die Realisierung von Koordinationsfunktionen.

Die Funktionsmodule werden von den höheren zu den niedrigeren Hierarchieebenen immer weiter verfeinert, bis eine Verfeinerung nicht mehr möglich ist. Solche Funktionsmodule, die im folgenden als Basisfunktionsobjekte bezeichnet werden, stellen z. B. die Funktionen für Steuerungen von Motoren, Ventilen, Schützen und dergleichen dar. Sie können in Bibliotheken gespeichert werden und in der ursprünglichen oder in modifizierter Form wieder- bzw. mehrfach verwendet werden.

Schließlich gibt es noch eine Darstellungsart "Bedien- und Beobachtungsstruktur" mit verschiedenen Bildobjekten. Die übergeordneten Bildobjekte sind die Gutstoffbütte und der Vertikalsichter. Darunter schließen sich weitere Bildobjekte an, die jeweils einem Anlagenobjekt und/oder einem Funktionsmodul entsprechen. In der Regel ist nicht jedem Anlagenobjekt und Funktionsmodul ein Bildobjekt zugeordnet.

Die Funktionsmodule weisen als Programmbausteine Eingänge auf, über welche Fortschaltbedingungen oder Befehle eingegeben werden, die den Übergang von einem Zustand zu einem anderen auslösen. Im folgenden wird der Einfachheit halber für alle Eingangssignale nur der Ausdruck "Befehle" verwendet. Über Ausgänge werden Meldungen über den jeweiligen vom Funktionsmodul eingenommenen Zustand ausgegeben. Ferner ist das Verhalten der Funktionsmodule in den einzelnen Zuständen gespeichert, und zwar als zeitliche Sequenzen von Zustandsübergängen. Das neue Programmiergerät enthält eine Visualisierungseinheit, mit der einerseits die Funktionsmodule und ihr Zustandsverhalten erzeugt und miteinander verschaltet werden können, wobei ein Programmbaustein und letztlich ein Programm mit den der Bildschirmdarstellung entsprechenden technischen Funktionen erstellt wird, und mit der andererseits die Funktionsmodule in einer die technische Funktion ausdrückenden Art dargestellt werden.

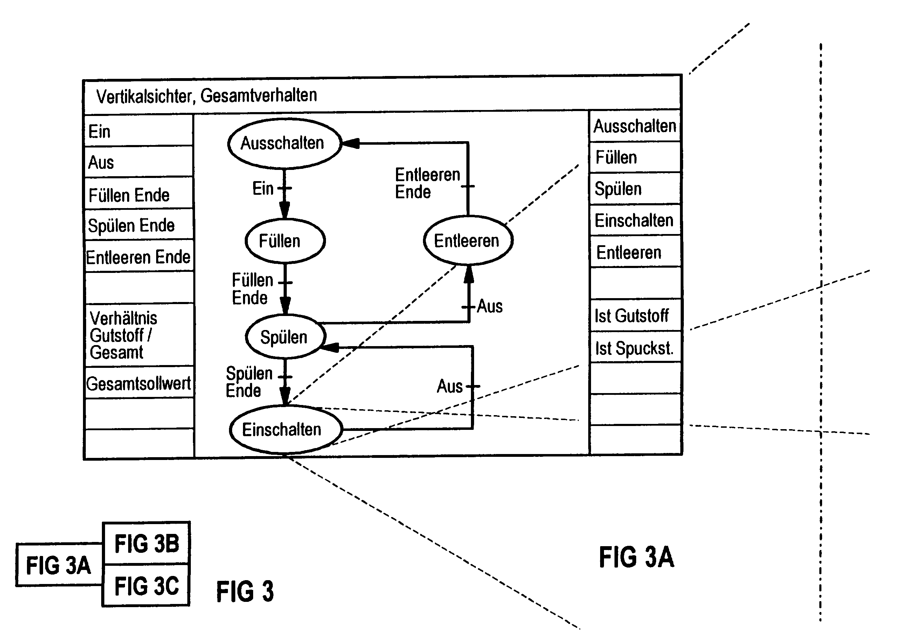

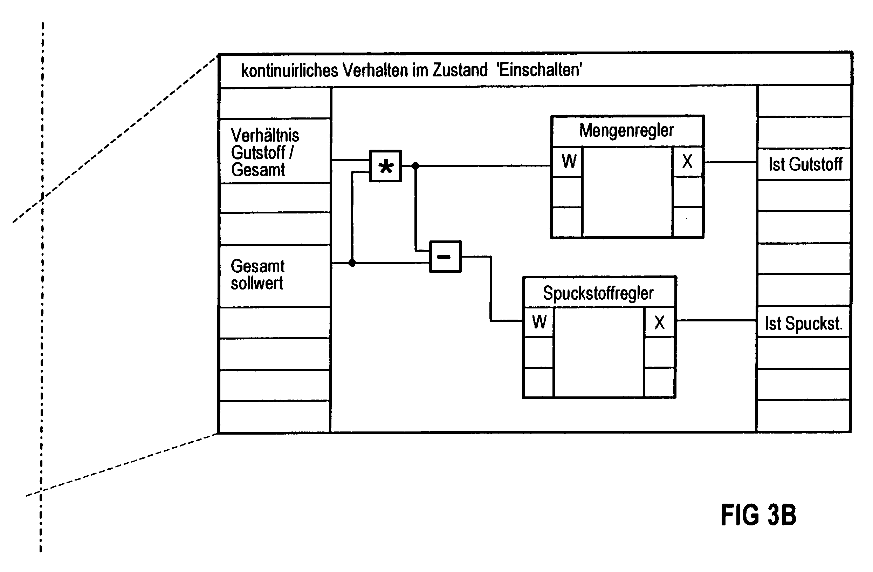

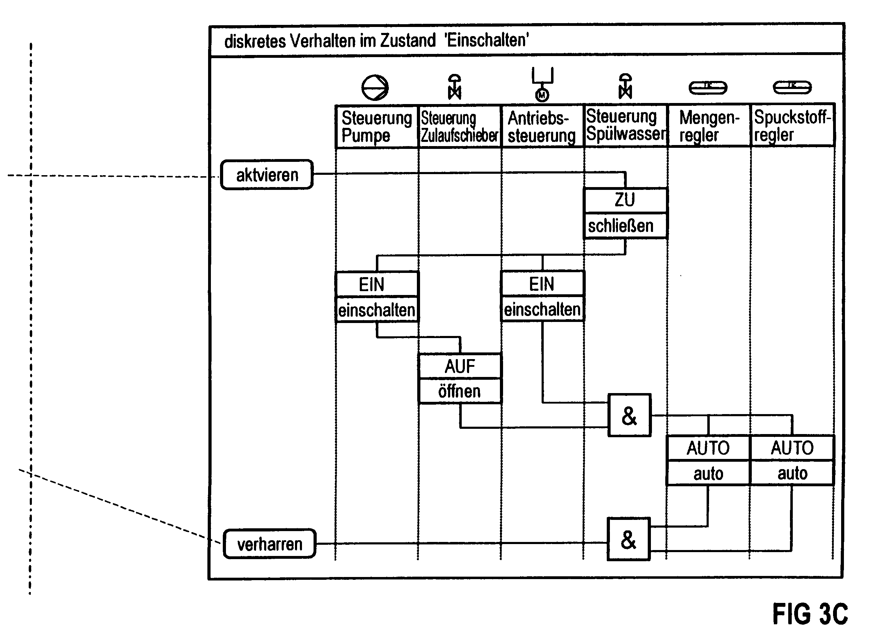

Vorteilhaft werden die Funktionsmodule als Zustandsgraphen dargestellt. Figur 3 zeigt die Darstellung des Funktionsmoduls "Vertikalsichter". In einem ersten Feld (Figur 3a) ist der Zustandsgraph wiedergegeben. In einer linken Leiste sind die Befehle und in einer rechten Leiste Ausgangssignale aufgeführt, die je einem Zustand des Vertikalsichters entsprechen. Das diskrete Verhalten hat fünf Zustände "Ausschalten", "Füllen", "Spülen", "Einschalten", "Entleeren", die im Zustandsgraphen als Blöcke, die im Ausführungsbeispiel ellipsenförmig sind, dargestellt werden. Sie sind über Transitionen "Ein", "Ausfüllen Ende", "Spülen Ende", "Entleeren Ende" verbunden; die Richtung der Transitionen ist durch Pfeile angegeben. Jeder Transition ist ein Eingangsbefehl zugeordnet. Die Befehle oder die Ausgangssignale können logisch verknüpft werden.

Der Vertikalsichter sei im Zustand "Ausschalten". Die Transition von diesem Zustand nach dem Zustand "Füllen" wird ausgeführt, wenn der Befehl "Ein" an den Eingang angelegt wird. Der Vertikalsichter geht dann in den Zustand "Füllen", in dem Spülwasser eingefüllt wird, bis das Signal "Füllen Ende" am Eingang erscheint. Damit ist der Zustand "Spülen" erreicht. Über die Transition "Spülen Ende" geht der Vertikalsichter in den Zustand "Einschalten", in dem Zellulose aus der Gutstoffbütte zugeführt und in Gutstoff und in Spuckstoff getrennt wird. Dieser Zustand kann mit dem Befehl "Aus" beendet werden. Darauf wird der Vertikalsichter gespült. Nach einem weiteren Befehl "Aus" wird er entleert. Mit dem Befehl "Entleeren Ende" wird schließlich wieder der Ausgangszustand "Ausschalten" erreicht.

Die fünf diskreten Zustände sind in einer Ausgangsleiste aufgeführt und werden als binäre Ausgangssignale abgegeben. Sie sind wie die Eingangssignale "Ein", "Aus", "Füllen Ende" ... vom Typ "Boolean", die als Befehle interpretiert werden. Im Ausführungsbeispiel ist das Signal aktiv, d. h., der Befehl wird gegeben, wenn eine log. "1" anliegt. Beim Pegel "0" liegt kein Befehl an. Für das komplementäre Befehlspaar "Ein/Aus" sind daher zwei Eingangsbefehle erforderlich. Liegen sowohl am Eingang "Ein" als auch am Eingang "Aus" die Signalpegel "1" an, d. h., sind beide Befehle aktiv, so entscheidet das innere Verhalten des Funktionsmodules, welcher Befehl Vorrang hat, z. B. kann der Befehl "Aus" je nach Zustand des Funktionmoduls eine höhere oder niedrigere Priorität als der Befehl "Ein" haben. Befindet sich z. B. das Funktionsmodul nach Figur 3 im Zustand "Ausschalten" und hat dabei der Befehl "Aus" die höhere Priorität, so ist der Befehl "Ein" unwirksam, wenn gleichzeitig der Befehl "Aus" anliegt.

Für die Ausgangssignale gilt, daß sie den Wert "1" haben, wenn der korrespondierende Zustand aktiv ist. Da immer nur ein Zustand aktiv ist, kann jeweils zu einem Zeitpunkt nur eines der Ausgangssignale den Wert "1" annehmen. In manchen Situationen kann die Ausgabe von mehreren "1"-Signalen zweckmäßig sein. Dies kann mit einer nachgeschalteten logischen Verknüpfung erreicht werden. Durch die Verschaltung von Zuständen kann daher nach außen hin mehr als ein Zustand aktiv sein.

Pro Zustand kann ein kontinuierliches Verhalten unterlegt sein. Im Ausführungsbeispiel sind dies für den Zustand "Einschalten" die Mengen- und die Spuckstoffregelung sowie die Berechnung der Sollwerte in einem Gruppenfunktionsmodul. Das Feld für das kontinuierliche Verhalten, das in Figur 3b gezeigt ist, hat zwei Eingänge. Dem Eingang "Verhältnis Gutstoff/Gesamt" wird als Sollwert das Verhältnis der Menge des abzuleitenden Gutstoffes zur Gesamtmenge der der Gutstoffbütte entnommenen Zellulose und dem Eingang "Gesamt-Sollwert" die Gesamtmenge des der Gutstoffbütte zu entnehmenden Zellulose eingegeben. Durch Multiplikation der beiden Sollwerte wird der Sollwert für die Gutstoffmenge gewonnen, durch Subtraktion dieses Sollwertes vom Sollwert für die Gesamtmenge entsteht der Sollwert für den Spuckstoffregler.

Für das Gesamtverhalten des Vertikalsichters haben Aufbau und Parameter sowie Zustand der Regler nach außen hin keine Bedeutung. Von außen sollen eingegeben werden können das Verhältnis "Gutstoffmenge/Gesamtmenge" und der "Gesamt-Sollwert". Auch sollen von außen die Istwerte von Gutstoff und Spuckstoff abgerufen werden können, die in den Reglern vorhanden sind. Deshalb sind in der rechten Leiste, das ist die Ausgangssignalleiste, die Werte "Ist-Gutstoff" und "Ist-Spuckstoff" scheinbar überraschend als Ausgangssignale der Regler aufgeführt. Damit Einzelheiten der Regler angezeigt werden, sind ihre Funktionsmodule, die einer niedrigeren Hierarchieebene angehören, aufzurufen, z. B. durch "Anklicken" der Regler in der Darstellung nach Figur 3.

In Figur 3 ist das kontinuierliche Verhalten nur einem Zustand, nämlich dem Zustand "Einschalten" zugeordnet. Es können aber auch mehrere Zustände kontinuierliches Verhalten zeigen. In diesem Fall ergibt sich das kontinuierliche Verhalten des kompletten Funktionsmoduls aus der Überlagerung der einzelnen Verhalten in den Zuständen.

Das diskrete Zustandsverhalten wird, wie aus Figur 3c ersichtlich, in einer funktionalen Sequenz von Zustandsübergängen der untergeordneten Funktionsmodule dargestellt. In einer Kopfleiste sind die untergeordneten relevanten Funktionsmodule angegeben. Die Übergänge der untergeordneten Funktionsmodule, die in dem beschriebenen Zustandsverhalten relevant sind, werden entsprechend der Kopfleiste in einer Spalte untereinander angeordnet. Ein einzelner Zustandsübergang kann komplett in Form des Tripels "Ausgangszustand-Befehl-Folgezustand" oder in Kurzform ohne Ausgangszustand dargestellt werden. Das Erreichen eines Folgezustandes aufgrund eines Befehls ist das Ereignis, welches bei den verbundenen Funktionsmodulen wiederum einen Befehl auslöst. Durch logische Verknüpfungen kann die Triggerbedingung auf das Vorliegen mehrerer Zustände ausgeweitet werden. Analog dazu kann die Bedingung für die Endsituation direkt an einen Zustand geknüpft sein oder wieder an eine logische Verknüpfung von Zuständen. Das Zustandsverhalten besteht daher in dem Ablauf zwischen dem Eintritt in einen Zustand und dem Warten auf den nächsten Übergang. Es ist über die beiden Konnektoren "Aktivieren" und "Verharren" mit dem Abarbeiten der Zustände gekoppelt. Wenn ein Zustand aktiv ist, wird das Zustandsverhalten über den Konnektor "Aktivieren" angestoßen. Die untergeordneten Funktionsmodule führen dann nacheinander oder parallel die einzelnen Befehle aus, bis schließlich ein eingeschwungener Zustand erreicht ist. Diese Situation wird über den Konnektor "Verharren" an die Ablaufkontrolle des Zustandsgraphen gemeldet. Daraufhin wird die Auswertung der nächsten Transition angestoßen. Bei Erfüllung der Transitionsbedingung wird der Zustand deaktiviert und der Folgezustand aktiviert.

Bezogen auf das Beispiel in Figur 3c, in welcher das diskrete Verhalten des Funktionsmoduls "Vertikalsichter" im Zustand "Einschalten" dargestellt ist, ergibt sich folgendes: Mit dem Übergang in den Zustand "Einschalten" erhält das Modul "Steuerung Spülwasser" den Befehl "Zu" und das Spülwasserventil SWV (Figur 1) wird geschlossen. Ist dieses zu, werden die Pumpe ZLP und die Antriebssteuerung der Zentrifuge ZFG eingeschaltet. Nach dem Einschalten der Pumpe ZLP wird vom Modul "Steuerung Zulaufschieber" der Zulaufschieber ZLS geöffnet. Ist dieser offen und die Zentrifuge eingeschaltet, werden der Mengen- und der Spuckstoffregler ZLR, SSR in den Regelbetrieb geschaltet. Ihre Meldungen "Auto", die anzeigen, daß sie im Regelbetrieb sind, werden logisch "UND-verknüpft, d. h., es wird der Konnektor "Verharren" erreicht, in dem auf den Befehl "AUS" gewartet wird. Aus den in Figur 3c gezeigten zeitlichen Sequenzen kann der Programmbaustein abgeleitet werden, mit denen die zugehörigen Anlagenobjekte gesteuert werden. Umgekehrt werden die Programmbausteine in der in Figur 3 gezeigten Art dargestellt.

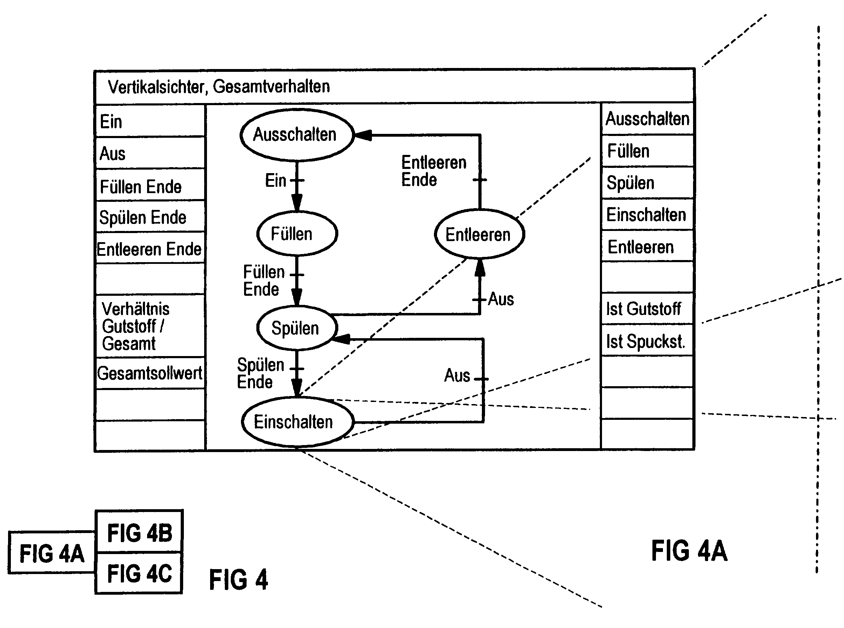

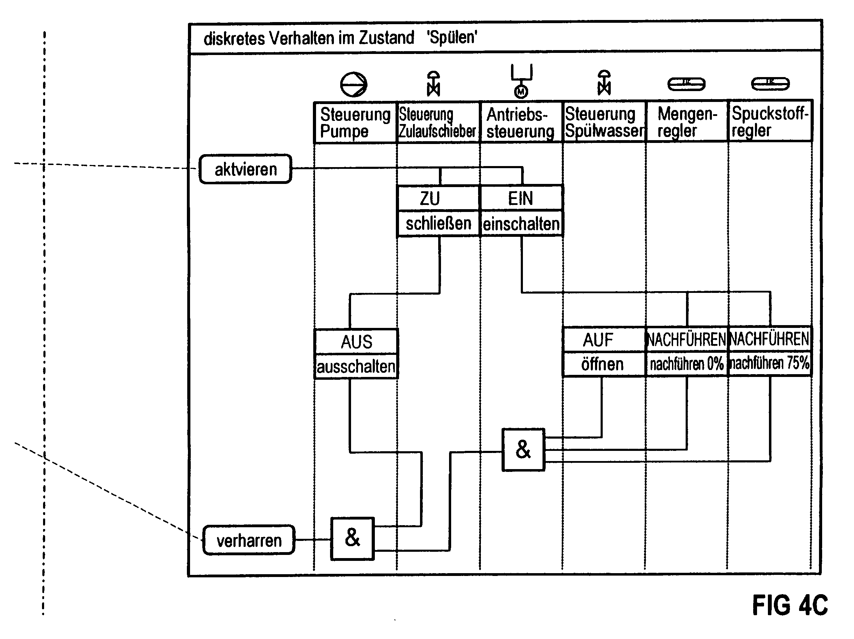

Zur weiteren Verdeutlichung der Funktionsmodule ist der Zustand "Spülen" des Funktionsmoduls "Vertikalsichter" dargestellt. Der Zustandsgraph nach Figur 4a stimmt mit dem der Figur 3a nahezu überein, lediglich mit dem Unterschied, daß anstatt des Feldes "Einschalten" das Feld "Spülen" markiert ist. In dem in Figur 4c wiedergegebenen Feld ist das diskrete Verhalten im Zustand "Spülen" dargestellt. In einer Kopfzeile sind wieder die am Zustandsverhalten beteiligten, dem Funktionsmodul "Vertikalsichter" untergeordneten Funktionsmodule aufgeführt. Darunter sind wieder die Sequenzen von Zustandsübergängen angegeben, und zwar jeweils in einem Rechteck, in dessen oberen Teil ein Befehl und in dessen unteren Teil der Folgezustand eingetragen ist. Der Ausgangszustand braucht nicht angegeben zu werden. Wird der Zustand "Spülen" aktiviert, erhält das Funktionsmodul "Steuerung Zulaufschieber" den Befehl "Zu" und das Funktionsmodul "Antriebssteuerung" den Befehl "Ein". Der Zulaufschieber wird darauf geschlossen und der Zentrifugenantrieb eingeschaltet. Letzteres erscheint, wenn der Zustand "Spülen" vom Zustand "Einschalten" aus erreicht wird, überflüssig, da dann die Zentrifuge schon läuft. Damit das Funktionsmodul jedoch universell und unabhängig vom Ausgangszustand, in dem die Zentrifuge vielleicht still steht, verwendet werden kann, gibt man den Einschaltbefehl für die Zentrifuge. Ist der Zulaufschieber geschlossen, wird die Pumpe ZLP abgeschaltet. Nach dem Einschalten der Zentrifuge wird durch Ansteuern der Funktionsmodule "Steuerung Spülwasser", "Mengenregler" und "Spuckstoffregler" das Spülwasserventil SWV geöffnet und die beiden Regler auf "Nachführen" geschaltet, wobei der Nachführwert für den Mengenregler 0 % ist - es wird keine Zellulose dem Vertikalsichter zugeführt - und für den Spuckstoffregler 75 % ist, damit das Spülwasser abgeleitet wird. Die Ausgangssignale der Funktionsmodule "Steuerung Pumpe", "Steuerung Spülwasser", "Mengenregler" und "Spuckstoffregler" werden UND-verknüpft, d. h., wenn die Pumpe ZLP ausgeschaltet, das Spülwasserventil offen und der Mengen- und der Spuckstoffregler auf "Nachführen" geschaltet sind, ist der Zustand erreicht, in dem der nächste Befehl erwartet wird, der entweder "Spülen Ende" oder "Aus" ist.

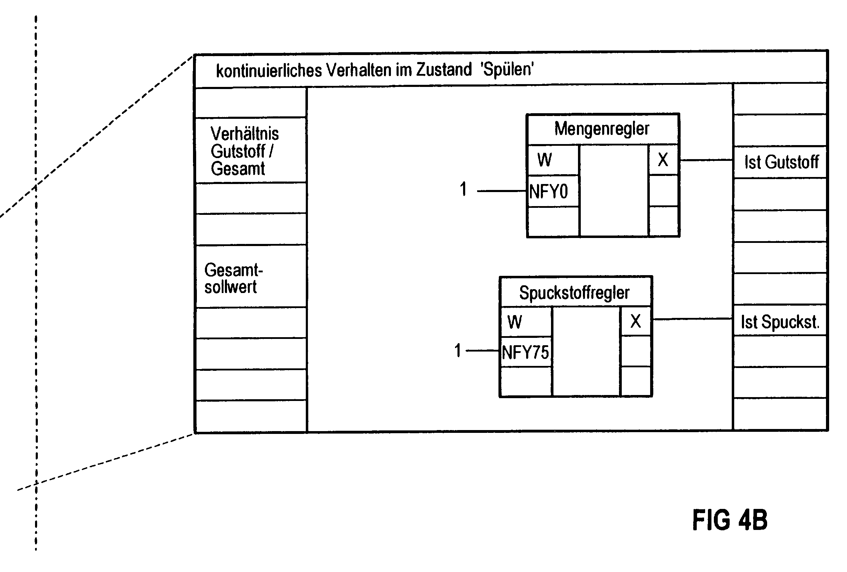

Figur 4b zeigt das kontinuierliche Verhalten im Zustand "Spülen". Es ist ersichtlich, daß den Reglern Festwerte 0 % und 75 % zugeführt werden, daß sie also im Nachführbetrieb arbeiten. Die Istwerte für die Durchflüsse von Gut- und Spuckstoff können wieder abgerufen werden.

Die in den Figuren 3 und 4 gezeigte Darstellungsart ist nur eine von mehreren möglichen. So können die drei Felder mit dem Zustandsgraphen, dem kontinuierlichen und dem diskreten Verhalten anders angeordnet werden. Insbesondere kann das Feld "kontinuierliches Verhalten" über dem Feld mit dem Zustandsgraphen angebracht sein, so daß die beiden Felder in gleicher Breite unmittelbar aneinander anschließen. Die Leisten der Ein- und Ausgangssignale beider Felder sind dann durchgehend. Die Ein- und Ausgänge für die Werte des kontinuierlichen Verhaltens brauchen dann nicht mehr in die Ein- und Ausgangsleisten des Zustandsgraphen eingetragen sein. Auch können die Ein- und Ausgangsleisten horizontal verlaufen, so daß im Feld "diskretes Verhalten" die untergeordneten Funktionsmodule nicht in einer Kopfzeile, sondern in einer Anfangsspalte aufgeführt sind. Die Verhaltenssequenzen sind dann je Funktionsmodul in einer Zeile dargestellt.

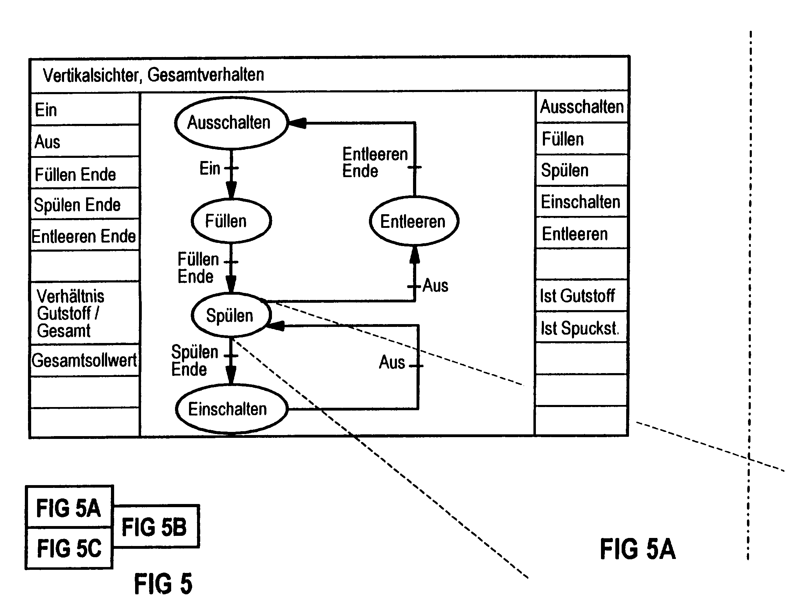

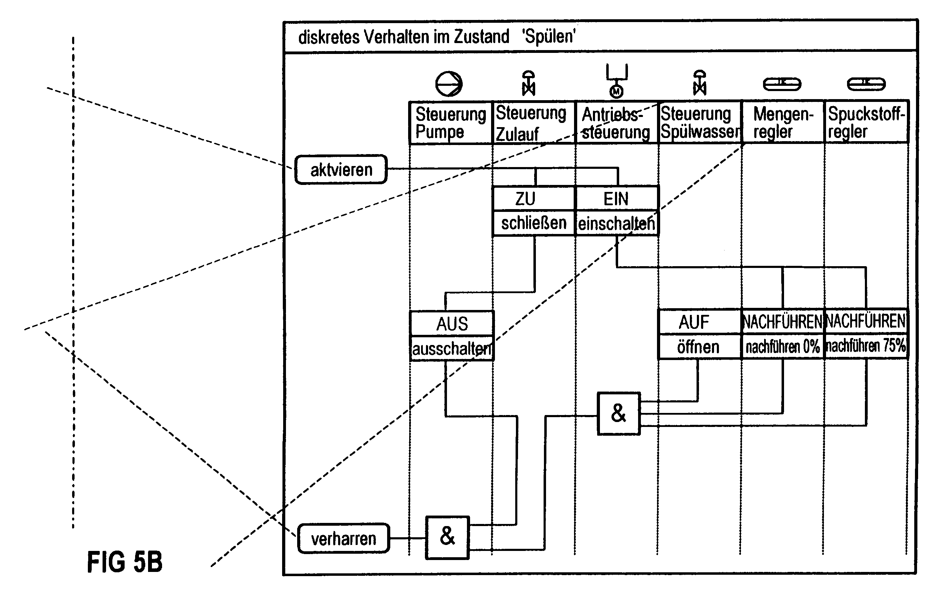

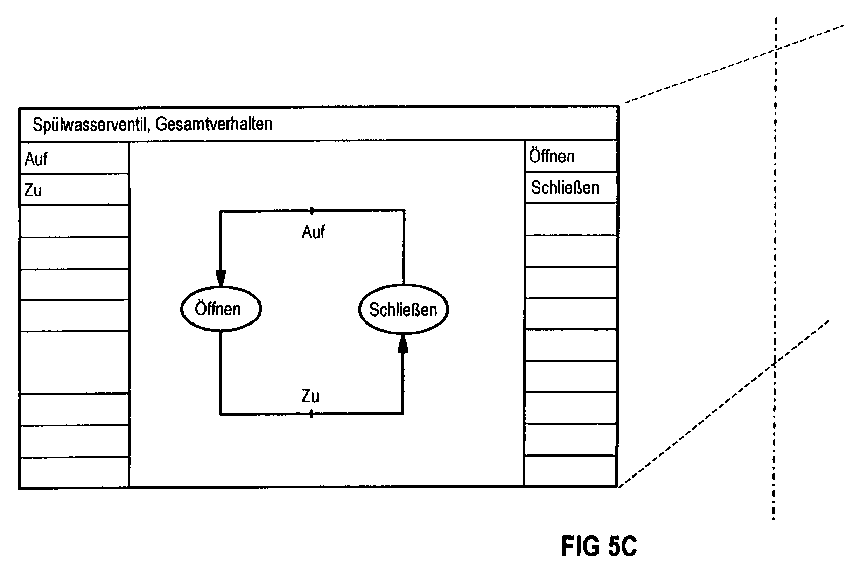

Figur 5 verdeutlicht die Hierarchie der Funktionsmodule. In den Figuren 5a und 5b sind - wie in Figur 4 - der Zustandsgraph für das Funktionsmodul "Vertikalsichter" und dessen diskretes Verhalten im Zustand "Spulen" dargestellt. Ein untergeordnetes Funktionsmodul ist das Modul "Steuerung Spülwasser", dessen Zustandsgraph in Figur 5c wiedergegeben ist. Es hat zwei Zustände "Öffnen" und "Schließen", die über die Transitionen "Auf" und "Zu" verbunden sind. Eine Verfeinerung dieses Funktionsmoduls ist nicht mehr möglich, da sowohl das Anlagenobjekt "Spülwasserventil" nicht aus weiteren Objekten besteht als auch dem Funktionsmodul keine anderen Module untergeordnet sind. Dieses einfache Beispiel zeigt, daß von außen nur einem Funktionsmodul die Befehle gegeben werden, die für den Betrieb des zugehörenden Anlagenobjektes als abgeschlossene Einheit relevant sind. Ein Vertikalsichter muß ein- und ausgeschaltet werden können. Ferner muß das Füllen, das Spülen und das Entleeren beendet werden können. Zusätzlich müssen das Verhältnis Gutstoff/Gesamtmenge und die Gesamtmenge selbst als Sollwerte vorgegeben werden können. Ein den jeweiligen Zustand kennzeichnendes Signal wird nach außen abgegeben und ferner werden als kontinuierliche Signale die Istwerte für Gutstoff und Spuckstoff nach außen geführt. Als diskrete Ausgangssignale werden nur die fünf Zustände angezeigt, welche der Vertikalsichter einnehmen kann. Die Befehle für die untergeordneten Funktionsmodule, z. B. "Ein" und "Aus" für das Funktionsmodul "Spülwasserventil" werden nicht nach außen geführt, sie werden intern erzeugt und verarbeitet und treten nach außen nicht in Erscheinung. Auch die die Zustände der untergeordneten Funktionsmodule anzeigenden Ausgangssignale werden nur intern verwertet. Die untergeordneten Funktionsmodule werden daher von den Modulen der höheren Hierarchieebenen gewissermaßen abgekapselt. Es ergibt sich damit eine Vielzahl von kleinen überschaubaren Funktionsmodulen, die mit Anlagenobjekten unterschiedlicher Komplexität verbunden sind und die klare, auf den notwendigen Umfang beschränkte Schnittstellen haben. Damit ergibt sich auch eine übersichtliche, der Anlagentechnologie angepaßter Programm- und Funktionsstruktur.

Das Programm, d. i. die Gesamtheit der Funktionsmodule und ihrer Verknüpfungen wird zunächst, wie beschrieben, anlagen-orientiert und ohne Berücksichtigung der möglichen Automatisierungsgerätestruktur erstellt. Für die Projektion der Funktionsmodule auf die schließlich zur Realisierung gewählten Automatisierungsgeräte muß zunächst die Auswahl der Funktionsmodule und die Gerätezuordnung vorgenommen werden. Bei dieser Aufteilung ergeben sich dann die benötigten Kommunikationsschnittstellen und die zugehörige Realisierung der Kommunikationsaufgaben. Auf dieser Basis werden abschließend die Ladeeinheiten für die einzelnen Automatisierungsgeräte produziert.

## Patentansprüche

1. Programmiergerät zum Erstellen und Inbetriebsetzen von Programmen zur Automatisierung von technischen Anlagen, die in mehrere Hierarchieebenen aus zusammenwirkenden Anlagenobjekten gegliedert sind, von denen übergeordnete Anlagenobjekte (z. B. "Vertikalsichter") höherer Hierarchieebenen jeweils aus mindestens einem untergeordneten Anlagenobjekt ("Pumpe", "Antrieb", ...) der darunterliegenden Hierarchieebene bestehen,
- mit einem Speicher,
- in dem Funktionsmodule (z. B. "Steuerung Vertikalsichter") gespeichert sind, welche
- jeweils mindestens einem Anlagenobjekt ("Vertikalsichter") zugeordnet sind,
- die zugeordneten Anlagenobjekte steuern, regeln, überwachen und koordinieren,
- unterschiedliche Zustände ("Ausschalten", "Füllen", "Spülen", ...) einnehmen können und
- Ein- und Ausgänge aufweisen, über welche Befehle ("Ein", "Aus", "Füllen Ende", ...) zur Zustandsänderung eingegeben und Meldungen über den jeweils erreichten Zustand ausgegeben werden,
- in dem ferner das Verhalten übergeordneter Funktionsmodule (z. B. "Steuerung Vertikalsichter") in den einzelnen Zuständen in Form von funktionellen Sequenzen von Übergängen zwischen Zuständen der jeweils untergeordneten Funktionsmodule ("Steuerung Pumpe", "Antriebssteuerung", ...) gespeichert ist, wobei die Sequenzen diejenigen Zustände derjenigen untergeordneten Funktionsmodule enthalten, die zum Erreichen des Zustands des übergeordneten Funktionsmoduls zu durchlaufen sind, und
- mit einer Visualisierungseinheit, mit der die Funktionsmodule und ihr Verhalten in den einzelnen Zuständen erstellt, zusammengeschaltet und symbolhaft dargestellt werden (Figur 2A, 2B).

2. Programmiergerät nach Anspruch 1, **dadurch gekennzeichnet**, daß die Visualisierungseinheit Mittel enthält, mit denen die Funktionsmodule jeweils als Zustandsgraph darstellbar sind, der Symbole für die Zustände ("Ausschalten", "Füllen", "Spülen", ...) des zugehörigen Anlagenobjektes ("Vertikalsichter") und für die durch die Befehle ("Ein", "Füllen Ende", ...) gesteuerten Übergänge zwischen den Zuständen sowie gegebenenfalls für logische Verknüpfungsglieder zum Verknüpfen der Befehle oder der Zustandsmeldungen aufweist (Figur 3A).

3. Programmiergerät nach Anspruch 1 oder 2, **dadurch gekennzeichnet**, daß die Visualisierungseinheit Mittel enthält, die das Verhalten eines Funktionsmoduls (z. B. "Steuerung Vertikalsichter") in seinen Zuständen (z. B. "Einschalten") in der Weise darstellt, daß jedem untergeordneten Funktionsmodul ("Steuerung Pumpe", "Steuerung Zulaufschieber", ) eine Spalte oder Zeile zugeordnet ist, daß in der ersten Zeile/Spalte das untergeordnete Funktionsmodul bezeichnet ist und daß in den folgenden Zeilen/Spalten die Zustandsübergänge, geordnet nach ihrem funktionellen Zusammenwirken, eingetragen sind (Figur 3C).

4. Programmiergerät nach Anspruch 3, **dadurch gekennzeichnet**, daß die Zustandsübergänge der untergeordneten Funktionsmodule (z. B. "Steuerung Pumpe") jeweils aus einem Befehl ("Ein") und der Angabe des Folgezustandes ("Einschalten") bestehen (Figur 3C).

5. Programmiergerät nach Anspruch 3, **dadurch gekennzeichnet**, daß die Zustandsübergänge der untergeordneten Funktionsmodule (z. B. "Steuerung Vertikalsichter") jeweils aus dem Ausgangszustand (z. B. "Ausschalten") einem Befehl ("Ein") und dem Folgezustand ("Füllen") bestehen (Figur 3A).

6. Programmiergerät nach einem der Ansprüche 3 bis 5, **dadurch gekennzeichnet**, daß Ausgangszustände kennzeichnende Signale über logische Verknüpfungsglieder geführt sind.

7. Programmiergerät nach einem der Ansprüche 1 bis 6, **dadurch gekennzeichnet**, daß die Visualisierungseinheit jeweils in einem ersten Feld (Figur 3A) das Gesamtverhalten eines Funktionsmoduls, in einem zweiten Feld (Figur 3C) die binären Zustände und Zustandsübergänge der untergeordneten Funktionsmodule und in einem dritten Feld (Figur 3B) das kontinuierliche Verhalten in mindestens einem Zustand darstellt.

8. Programmiergerät nach einem der Ansprüche 1 bis 7, **dadurch gekennzeichnet**, daß eine Prozessoreinheit vorhanden ist, welche die anlagenorientierte Zusammenstellung der Funktionsmodule in gerätespezifische ladbare Einheiten umformt.

## Claims

1. Programming device for compiling and commissioning programs for automating technical plants, which are organized into several hierarchical levels of interacting plant objects, of which higher-ranking plant objects (e.g. "vertical separator") of higher hierarchical levels each consist of a least one subordinate plant object ("pump", "drive", ...) of the hierarchical level lying below them,
- with a store
- in which function modules (e.g. "Vertical separator controller") are stored, which
- are assigned in each case to at least one plant object ("vertical separator"),
- control, adjust, monitor and coordinate the assigned plant objects,
- can assume different states ("Turn off", "Fill", "Rinse",...) and
- have inputs and outputs via which commands ("On", "Off", "Filling end",...) are input to change the state and messages are output regarding the state reached in each case,
- in which furthermore the characteristics of higher-ranking function modules (e.g. "Vertical separator controller") in the individual states are stored in the form of functional sequences of transitions between states of the respective subordinate function modules ("Pump controller", "Drive controller", ...), the sequences containing those states of those subordinate function modules which are to be passed through to achieve the state of the higher-ranking function module, and
- with a visualization unit, with which the function modules and their characteristics in the individual states are compiled, interconnected and represented symbolically (Figure 2A, 2B).

2. Programming device according to claim 1, characterized in that the visualization unit contains means with which the function modules are each capable of representation as a state graph, which has symbols for the states ("Turn off", "Fill", "Rinse", ...) of the related plant object ("Vertical separator") and for the transitions between the states controlled by the commands ("On", "Filling end", ...) as well as for logic operation elements if applicable to link the commands or the state messages (Figure 3A).

3. Programming device according to claim 1 or 2, characterized in that the visualization unit contains means which depict the characteristics of a function module (e.g. "Vertical separator controller") in its states (e.g. "Turn on") in the manner that a column or line is assigned to each subordinate function module ("Pump controller", "Supply slide valve controller", ...), that the subordinate function module is descriDed in the first line/column and that the state transitions, ordered according to their functional interaction, are entered in the following lines/columns (Figure 3C).

4. Programming device according to claim 3, characterized in that the state transitions of the subordinate function modules (e.g. "Pump controller") each consist of one command ("On") and an indication of the subsequent state ("Turn on") (Figure 3C).

5. Programming device according to claim 3, characterized in that the state transitions of the subordinate (higher-ranking) function modules (e.g. "Vertical separator controller") each consist of the initial state (e.g. "Turn off"), a command ("On") and the subsequent state ("Fill") (Figure 3A).

6. Programming device according to one of claims 3 to 5, characterized in that signals characterizing initial states are carried via logic operation elements.

7. Programming device according to one of claims 1 to 6, characterized in that the visualization unit depicts the overall characteristics of a function module in a first field (Figure 3A), the binary states and state transitions of the subordinate function module in a second field (Figure 3C), and the continuous characteristics in at least one state in a third field (Figure 3B) respectively.

8. Programming device according to one of claims 1 to 7, characterized in that a processor unit is present which converts the plant-oriented composition of the function modules into device-specific, loadable units.

## Revendications

1. Appareil de programmation pour élaborer et mettre en service des programmes destinés à l'automatisation d'installations techniques qui sont décomposées en plusieurs niveaux hiérarchiques d'objets d'installation coopérants, parmi lesquels des objets d'installation de rang supérieur (par exemple "séparateur vertical") sont constitués chacun d'au moins un objet d'installation subordonné ("pompe", "entraînement", ...) du niveau hiérarchique inférieur,
- comprenant une mémoire,
- dans laquelle sont mémorisés des modules fonctionnels (par exemple "commande de séparateur vertical") qui
- sont associés chacun à au moins un objet d'installation ("séparateur vertical")
- commandent, règlent, surveillent et coordonnent les objets d'installation associés,
- peuvent prendre différents états ("hors service", "remplissage", "rinçage", ...) et
- comportent des entrées et des sorties par l'intermédiaire desquelles des instructions ("marche", "arrêt", "fin de remplissage", ...) sont données pour le changement d'état et des messages concernant l'état respectivement atteint sont délivrés,
- dans laquelle est aussi mémorisé le comportement de modules fonctionnels de rang supérieur (par exemple "commande de séparateur vertical") dans les différents états sous forme de séquences fonctionnelles de transitions entre états des modules fonctionnels respectivement subordonnés ("commande de pompe", "commande d'entraînement", ...), les séquences contenant alors les états des modules fonctionnels subordonnés qui sont à parcourir pour atteindre l'état du module fonctionnel de rang supérieur, et
- comprenant une unité de visualisation, avec laquelle les modules fonctionnels et leur comportement dans les différents états sont élaborés, connectés et représentés symboliquement (figures 2A, 2B).

2. Appareil de programmation selon la revendication 1, caractérisé par le fait que l'unité de visualisation comporte des moyens par lesquels les modules fonctionnels peuvent être représentés chacun comme un graphe d'états qui comporte des symboles pour les états ("hors service", "remplissage", "rincage", ...) de l'objet d'installation associé ("séparateur vertical") et pour les transitions, commandées par les instructions ("marche", "fin de remplissage", ...) entre les états ainsi que, le cas échéant, pour des éléments de combinaisons logiques destinés à combiner les instructions ou les messages d'états (figure 3A).

3. Appareil de programmation selon la revendication 1 ou 2, caractérisé par le fait que l'unité de visualisation comporte des moyens qui représentent le comportement d'un module fonctionnel (par exemple "commande de séparateur vertical") dans ses états (par exemple "marche") d'une manière telle qu'à chaque module fonctionnel subordonné ("commande de pompe", "commande de robinet-vanne d'alimentation", ...) est associée une colonne ou une ligne, que dans la première ligne ou colonne le module fonctionnel subordonné est désigné et que dans les lignes ou colonnes suivantes les transitions d'états, organisées selon leur coopération fonctionnelle, sont enregistrées (figure 3C).

4. Appareil de programmation selon la revendication 3, caractérisé par le fait que les transitions d'états des modules fonctionnels subordonnés (par exemple "commande de pompe") consistent à chaque fois en une instruction ("marche") et en une indication de l'état suivant ("en service") (figure 3C).

5. Appareil de programmation selon la revendication 3, caractérisé par le fait que les transitions d'états des modules fonctionnels subordonnés (par exemple "commande de séparateur vertical") consistent à chaque fois en un état initial (par exemple "hors service"), en une instruction ("marche") et en un état suivant ("remplissage") (figure 3A).

6. Appareil de programmation selon l'une des revendications 3 à 5, caractérisé par le fait que des signaux caractérisant des états initiaux passent par des éléments de combinaisons logiques.

7. Appareil de programmation selon l'une des revendications 1 à 6, caractérisé par le fait que l'unité de visualisation représente à chaque fois dans un premier champ (figure 3A) le comportement global d'un module fonctionnel, dans un deuxième champ (figure 3C) les états binaires et les transitions d'état binaires des modules fonctionnels subordonnés et dans un troisième champ (figure 3B) le comportement continu dans au moins un état.

8. Appareil de programmation selon l'une des revendications 1 à 7, caractérisé par le fait qu'il est prévu une unité à processeur, qui transforme l'élaboration, fondée sur l'installation, des modules fonctionnels en des unités spécifiques aux appareils et pouvant être chargées.
